# EUROPEAN PATENT SPECIFICATION

(11) **EP 3 327 925 B1**
(45) Date of publication and mention of the grant of the patent: **12.02.2020**
(21) Application number: 17203904.2
(22) Date of filing: 27.11.2017
(51) Int. Cl.: H02P 21/00, F25B 13/00, H02K 21/14

(54) **ROTARY COMPRESSOR SYSTEM, ROTARY COMPRESSOR, AND MOTOR**
ROTATIONSVERDICHTERSYSTEM, ROTATIONSVERDICHTER UND MOTOR
SYSTÈME DE COMPRESSEUR ROTATIF, COMPRESSEUR ROTATIF ET MOTEUR

(30) Priority: 29.11.2016 JP 2016230973
(43) Date of publication of application: 30.05.2018
(73) Proprietor: MITSUBISHI HEAVY INDUSTRIES THERMAL SYSTEMS, LTD., Tokyo 108-8215 (JP)
(72) Inventor: OGAWA, Makoto, TOKYO, 108-8215 (JP); SATO, Hajime, TOKYO, 108-8215 (JP); ESAKI, Ikuo, TOKYO, 108-8215 (JP); UNO, Masanari, TOKYO, 108-8215 (JP); SHIMAYA, Hirofumi, TOKYO, 108-8215 (JP); MIURA, Shigeki, TOKYO, 108-8215 (JP); SASAKI, Mikito, TOKYO, 108-8215 (JP); NII, Masahiro, TOKYO, 108-8215 (JP); SHIMIZU, Kenji, TOKYO, 108-8215 (JP)
(74) Representative: Cabinet Beau de Loménie

(56) References cited:
- EP-A2- 2 592 720
- JP-A- H07 236 239
- MENG ZHANG ET AL: "A Speed Fluctuation Reducing Method for Sensorless PMSM-Compressor System in Air-Conditioners", ELECTRICAL MACHINES AND SYSTEMS, 2005. ICEMS 2005. PROCEEDINGS OF THE EIGHTH INTERNATIONAL CONFERENCE ON NANJING, CHINA 27-29 SEPT. 2005, PISCATAWAY, NJ, USA,IEEE, vol. 3, 27 September 2005 (2005-09-27), pages 1861-1864, XP010877632, ISBN: 978-7-5062-7407-4

## Description

### BACKGROUND OF THE INVENTION

### Field of the Invention

The present invention relates to a rotary compressor system, a rotary compressor, and a motor.

### Description of Related Art

In response to a demand for energy saving in recent years, an annual performance factor (APF) has also been emphasized in a compressor for an air conditioner. Generally, the efficiencies of compressors are lowered in a low-speed operation in many cases and efficiency improvement in a low-speed region also greatly contributes to the improvement of an APF. In losses of motors included in compressors, copper loss is dominant in a low-speed operation and the copper loss needs to be reduced to improve the efficiency in a low-speed region.

Examples of a method of reducing copper loss include a method of increasing a winding diameter and lowering a winding resistance value by reducing an outer diameter of a motor rotor to increase a stator winding slot.

Note that Patent Document 1 discloses an air conditioner designed so that a ratio of an amount of heat given by the radiator to an amount of refrigerant discharge per revolution of the compressor of a radiator and a compressor included in an air conditioner falls within a predetermined range to improve the energy efficiency in an air conditioner. Furthermore, Patent Document 1 discloses a ratio of a motor length to a stator outer diameter or a ratio of a motor length to a rotor outer diameter of a motor included in the compressor.

### [Patent Document]

[Patent Document 1] Japanese Unexamined Patent Application, First Publication No. 2008-215747

The paper by Meng Zhang et al., ("A Speed Fluctuation Reducing Method for Sensorless PMSM-Compressor System in Air-Conditioners", ELECTRICAL MACHINES AND SYSTEMS, 2005. ICEMS 2005. PROCEEDINGS OF THE EIGHTH INTERNATIONAL CONFERENCE ON NANJING, CHINA 27-29 SEPT. 2005, PISCATAWAY, NJ, USA,IEEE, (20050927), vol. 3, ISBN 978-7-5062-7407-4, pages 1861 - 1864, XP010877632) discloses a rotary compressor system according to the preamble of claim 1.

EP 2 592 720 A2 discloses a motor for a compressor.

### SUMMARY OF THE INVENTION

However, when an outer diameter of a motor rotor decreases, inertia in a rotational direction decreases, a variation in angular velocity occurs due to a variation in gas compression torque and thus the efficiency of a motor decreases. Therefore, this does not lead to the improvement of an APF. In order to improve the efficiency of the motor, it has been required to reduce the outer diameter of the motor rotor.

Therefore, an objective of the present invention is to provide a rotary compressor system, a rotary compressor, and a motor capable of solving the above-described problems.

The present invention provides a rotary compressor system for an air conditioner, including: a motor controllable by sensorless vector control; a rotary compressor including the motor; and a sensorless vector control circuit configured to control the motor included in the rotary compressor, wherein an outer diameter of a motor rotor of the motor is 46.8 mm or more and less than 50 mm, and wherein a ratio of a whole cross-sectional area of winding slots to a whole cross-sectional area of a stator of the motor is 32%.

An outer diameter of a motor rotor of the motor may be 46.8 mm or more and 49 mm or less.

An outer diameter of a motor rotor of the motor may be 46.8 mm.

There is also disclosed herein a rotary compressor, including: a motor controlled by sensorless vector control, wherein an outer diameter of a motor rotor of the motor is 46.8 mm or more and less than 50 mm.

There is also disclosed herein a rotary compressor for an air conditioner, the rotary compressor including a motor having an outer diameter of a motor rotor of 46.8 mm or more and less than 50 mm.

There is also disclosed herein a motor for mounting in a rotary compressor for an air conditioner, wherein an outer diameter of a motor rotor of the motor is 46.8 mm or more and less than 50 mm.

According to the present invention, it is possible to reduce the copper loss of a motor, realize high efficiency of the motor, and realize high efficiency of a compressor.

### BRIEF DESCRIPTION OF THE DRAWINGS

FIG. 1 is a vertical cross-sectional view of a rotary compressor according to an embodiment of the present invention.
FIG. 2 is a first diagram showing a control circuit of the rotary compressor according to the embodiment of the present invention.
FIG. 3 is a second diagram showing a control circuit of the rotary compressor according to the embodiment of the present invention.
FIG. 4 is a cross-sectional view of a motor included in the rotary compressor according to the embodiment of the present invention.
FIG. 5 is a cross-sectional view of a conventional motor included in a rotary compressor.

### DETAILED DESCRIPTION OF THE INVENTION

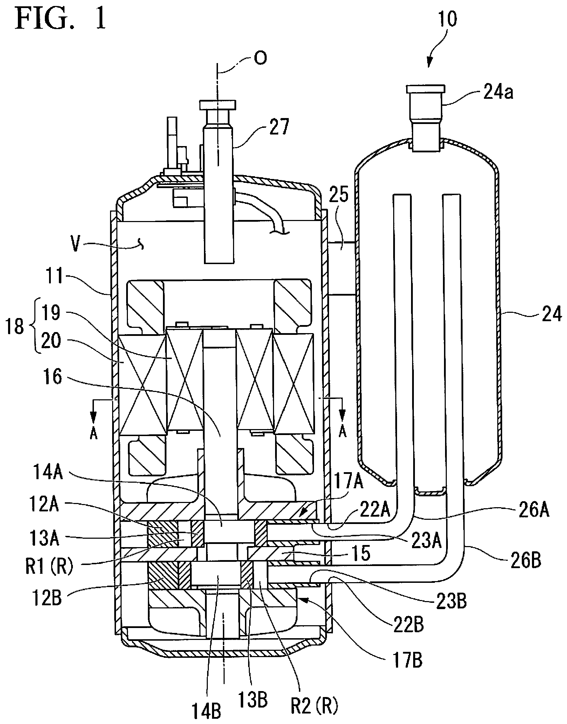

A rotary compressor system according to embodiments of the present invention will be described below with reference to FIGS. 1 to 5.

FIG. 1 is a side cross-sectional view of a rotary compressor according to a first embodiment of the present invention.

As shown in FIG. 1, a compressor 10 according to the embodiment includes a motor 18, a crankshaft 16 rotating along with the motor 18, piston rotors 13A and 13B eccentrically rotating along with the rotation of the crankshaft 16, cylinders 12A and 12B having compression chambers for accommodating the piston rotors 13A and 13B formed therein, and a housing 11 forming a discharge space V through which a compressed refrigerant is discharged and surrounding the cylinders 12A and 12B.

The compressor 10 is a so-called two-cylinder type rotary compressor in which the disk-shaped cylinders 12A and 12B are provided in two upper and lower stages in the cylindrical housing 11. The cylindrical piston rotors 13A and 13B having external forms smaller than inner sides of inner wall surfaces of the cylinders are arranged in the cylinders 12A and 12B. The piston rotors 13A and 13B are inserted and fixed into eccentric shaft parts 14A and 14B of a rotational axis along a central axis of the housing 11.

The upper-cylinder-side piston rotors 13A and the lower-cylinder-side piston rotor 13B are provided such that their phases differ from each other by 180°.

A disk-shaped partition plate 15 is provided between the upper and lower cylinders 12A and 12B. A space R in the upper-side cylinder 12A and a lower space R are partitioned into compression chambers R1 and R2 by the partition plate 15 without communicating with each other.

The crankshaft 16 is supported to be rotatable about an axis O by an upper bearing part 17A fixed to the cylinder 12A and a lower bearing part 17B fixed to the cylinder 12B.

The crankshaft 16 has the eccentric shaft parts 14A and 14B offset in a direction perpendicular to a central line of the crankshaft 16. The eccentric shaft parts 14A and 14B are pivoted about a central axis of the crankshaft 16 so that the upper and lower piston rotors 13A and 13B rotate eccentrically in the cylinder 12A and 12B following such pivoting.

The crankshaft 16 protrudes upward (that is, in a direction in which the motor 18 is located when viewed from the compressor 10) from the upper bearing part 17A. A motor rotor 19 of the motor 18 configured to rotatably drive the crankshaft 16 is integrally provided on one end portion of the crankshaft 16 in an axis O direction. A stator 20 is fixed and provided on an inner circumferential surface of the housing 11 to face an outer circumferential portion of the motor rotor 19.

In the compressor 10, an accumulator 24 configured to perform gas-liquid separation on a refrigerant before supplying the refrigerant to the compressor 10 is fixed to the housing 11 via a stay 25. Intake pipes 26A and 26B configured to suction a refrigerant in the accumulator 24 into the compressor 10 are provided in the accumulator 24. Distal end portions of the intake pipes 26A and 26B are connected to suction ports 23A and 23B through openings 22A and 22B.

The compressor 10 takes the refrigerant from a suction port 24a of the accumulator 24 into the accumulator 24. To be specific, the compressor 10 performs gas-liquid separation on the refrigerant in the accumulator 24, and supplies the gas phase from the intake pipes 26A and 26B to the compression chambers R1 and R2 serving as internal spaces of the cylinder 12A and 12B via the suction ports 23A and 23B of the cylinder 12A and 12B.

Moreover, the piston rotors 13A and 13B eccentrically rotate so that the volumes of the compression chambers R1 and R2 gradually decrease and thus the refrigerant is compressed. The refrigerant passes around the motor 18 and is then discharged to a pipe 27 constituting a refrigeration cycle via a discharge port provided at an upper part.

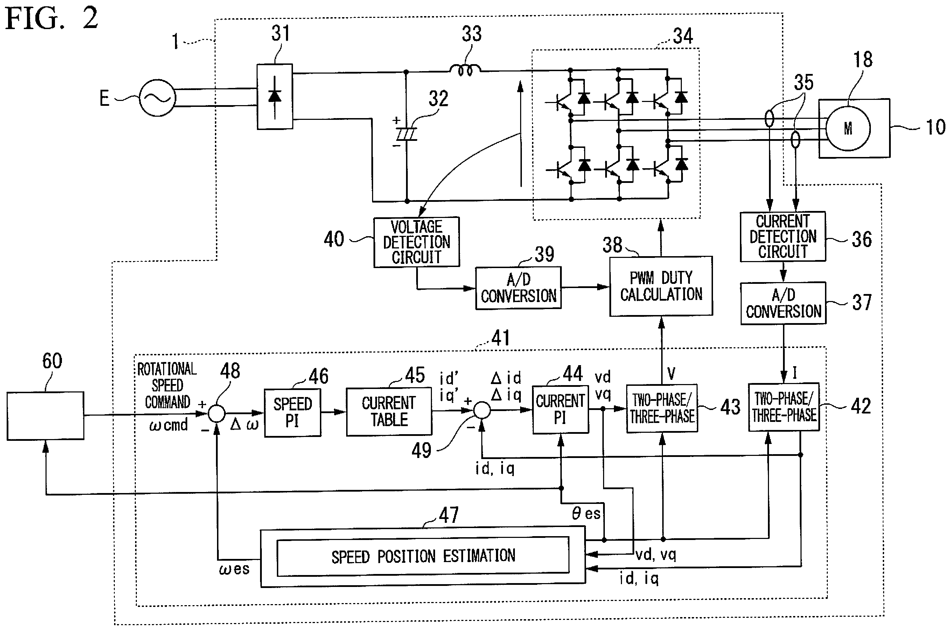

FIG. 2 is a first diagram showing a control circuit of the rotary compressor according to the embodiment of the present invention.

FIG. 2 illustrates a block diagram of a sensorless vector control circuit 1 configured to control the motor 18. The sensorless vector control circuit 1 shown in FIG. 2 includes a converter 31, a capacitor 32, a reactor 33, an inverter 34, a current sensor 35, a current detection circuit 36, an analog/digital (A/D) conversion circuit 37, a pulse width modulation (PWM) duty calculation circuit 38, an A/D conversion circuit 39, a voltage detection circuit 40, and a full vector control circuit 41. Furthermore, the full vector control circuit 41 includes a two-phase/three-phase conversion circuit 42, a two-phase/three-phase conversion circuit 43, a current PI control circuit 44, a current conversion table 45, a speed PI control circuit 46, a speed position estimation circuit 47, a subtractor 48, and a subtractor 49.

Note that a rotary compressor system includes a rotational speed control device 60, the sensorless vector control circuit 1, and a rotary compressor 10.

The converter 31 rectifies a three-phase alternating current (AC) input from a power system E. The capacitor 32 and the reactor 33 smooth the rectified voltage and generate a direct current (DC) voltage. The inverter 34 generates a three-phase drive voltage from the DC input voltage on the basis of a duty command value output by the PWM duty calculation circuit 38 and supplies a drive voltage to the motor 18 included in the compressor 10. Thus, the sensorless vector control circuit 1 drives the motor 18.

The current detection circuit 36 detects a current flowing through the motor 18 and outputs the detected current to the A/D conversion circuit 37. The A/D conversion circuit 37 converts the current detected by the current detection circuit 36 into a digital signal and outputs the converted signal to the full vector control circuit 41. In the full vector control circuit 41, the two-phase/three-phase conversion circuit 42 performs coordinate conversion (dq conversion) on a three-phase signal input from the A/D conversion circuit 37 and outputs the converted current values id and iq to the speed position estimation circuit 47. At this time, the two-phase/three-phase conversion circuit 42 refers to a previous estimation value θes of a magnetic pole angle by the motor rotor 19, which will be described below. The speed position estimation circuit 47 receives current values id and iq and electric power command values vd and vq in a dq coordinate system output by the current PI control circuit 44 as inputs and calculates an estimation value ωes of a rotational speed of the motor 18 and an estimation value θes of a magnetic pole angle (an angle of a magnetic pole position) of the motor rotor 19 using, for example, a method called a model reference adaptive system (MRAS).

The rotational speed control device 60 outputs a command value ωcmd of a rotational speed to a full vector control circuit 41. The subtractor 48 calculates a deviation Δω between a command value ωcmd of a rotational speed by a rotational speed control device 60 and an estimation value ωes of a rotational speed estimated by the speed position estimation circuit 47 and outputs the calculated deviation to the speed PI control circuit 46. The speed PI control circuit 46 calculates a torque command value for reducing the deviation (to 0) by PI control on the basis of Δω. The full vector control circuit 41 converts the torque command value into current command values id' and iq' on the basis of the current conversion table 45. The subtractor 49 calculates deviations Δid and Δiq between the current command values id' and iq' and id and iq output by the two-phase/three-phase conversion circuit 42 and outputs the calculated deviations to the current PI control circuit 44. The current PI control circuit 44 calculates voltage command values vd and vq for reducing the deviations by the PI control on the basis of the deviations Δid and Δiq. The current PI control circuit 44 outputs the voltage command values vd and vq to the two-phase/three-phase conversion circuit 43. The two-phase/three-phase conversion circuit 43 performs coordinate conversion of the voltage command values vd and vq from two phases to three phases by referring to the estimation value θes of the magnetic pole angle of the motor rotor 19 estimated by the speed position estimation circuit 47 and outputs the converted voltage command value V to the PWM duty calculation circuit 38. The PWM duty calculation circuit 38 receives the voltage command value V and a signal obtained by digitally converting the DC input voltage to the inverter 34 detected by the voltage detection circuit 40 using the A/D conversion circuit 39 as inputs and calculates a duty command value. The PWM duty calculation circuit 38 outputs the calculated duty command value to the inverter 34.

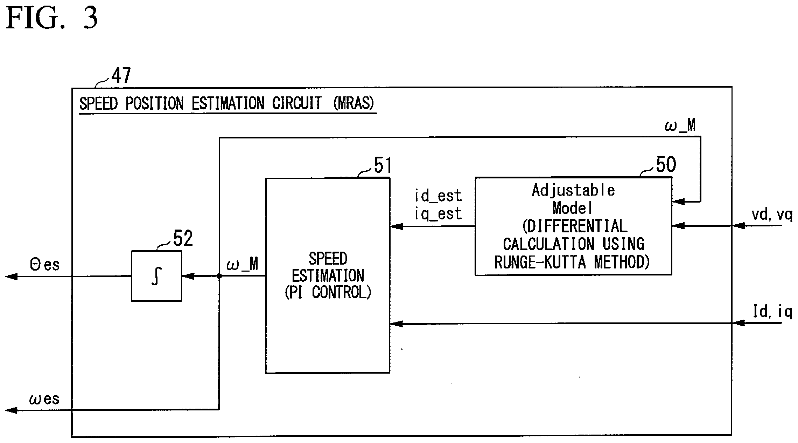

FIG. 3 is a second diagram showing the control circuit of the rotary compressor according to the embodiment of the present invention.

FIG. 3 illustrates a block diagram of the speed position estimation circuit 47. The speed position estimation circuit 47 includes a current-estimating circuit 50, a speed-estimating circuit 51, and an integrating circuit 52. The current-estimating circuit 50 receives the electric power command values vd and vq and an estimation value ω_M of the rotational speed of the motor rotor 19 estimated by the speed-estimating circuit 51 as inputs and estimates current estimation values id_est and iq_est on the basis of an adaptive model (an adjustable model) obtained by modeling the motor 18. The speed-estimating circuit 51 receives the current estimation values id_est and iq_est and id and iq as inputs and estimates a rotational speed (ω_M). The integrating circuit 52 integrates the estimation value ω_M of the rotational speed and calculates an estimation value θes of the magnetic pole angle of the motor rotor 19. The speed position estimation circuit 47 uses the estimation value ω_M of the rotational speed estimated by the speed-estimating circuit 51 as the estimation value ωes of the rotational speed and outputs the estimation value ω_M together with the estimation value θes of the magnetic pole angle of the motor rotor 19 calculated by the integrating circuit 52.

Since the inside of the compressor 10 becomes a high-temperature and high-pressure environment, it is difficult to provide a sensor configured to detect a position of the piston rotor 13. According to sensorless vector control (for example, MRAS control) using the control circuit shown in FIGS. 2 and 3, the rotational speed or the magnetic pole angle of the motor rotor 19 can be detected with high accuracy without using a sensor. Furthermore, since the motor rotor 19, the crankshaft 16, and the piston rotors 13A and 13B are integrally constituted and rotate, it is thought that a magnetic pole angle of the motor rotor 19 and positions of the piston rotors 13A and 13B are in a certain positional relationship. For this reason, the positions of the piston rotors 13A and 13B are estimated and controlled with high accuracy using the MRAS control so that a variation in an angular velocity of the crankshaft 16 can be minimized. Generally, since the rotary compressor receives a force from a high-pressure refrigerant gas as the compression of the refrigerant gas in the cylinders 12A and 12B progresses, the gas compression torque largely fluctuates during one compression process. With that influence, a variation occurs in the angular velocity of the crankshaft 16 during the compression process. However, when the MRAS control according to the embodiment is introduced, the rotational speed control device 60 calculates a command value of the rotational speed to minimize variations appearing in estimation values for a rotational speed or a magnetic pole angle of the motor rotor 19 so that the angular velocity variation of the crankshaft 16 can be minimized.

When countermeasures against a gas compression torque fluctuation during the compression process are considered from another point of view, in the motor control in the related art (when the MRAS control is not used), it is necessary to gain inertia by designing a size of the motor rotor 19 to a certain extent to reduce the influence of the gas compression torque fluctuation. However, since the rotational speed of the motor rotor 19 can be kept constant by introducing the MRAS control, the motor rotor 19 can be miniaturized without considering the above restriction. The efficiency of the motor can be improved by reducing a size of the motor rotor 19. Next, an example of miniaturization of the motor rotor 19 and its effects will be described.

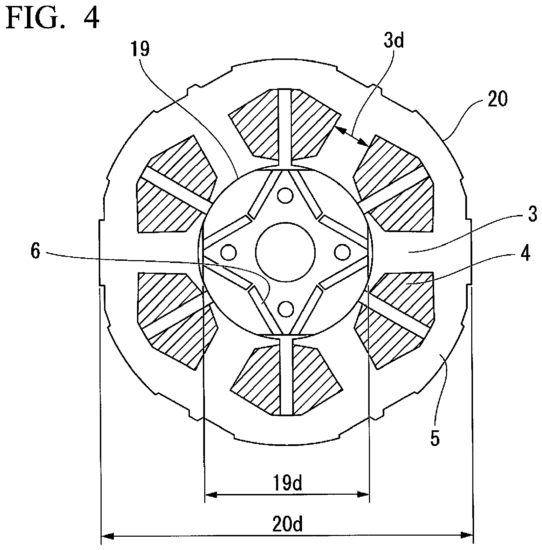

FIG. 4 is a cross-sectional view of a motor included in the rotary compressor according to the embodiment of the present invention. FIG. 4 illustrates a motor 18 in a cross-sectional view taken along line A-A in the compressor 10 of FIG. 1. FIG. 4 is the cross-sectional view of the motor 18 to which the MRAS control according to the embodiment is actually applied and which can drive the compressor 10 at a desired rotational speed by minimizing fluctuations in the rotational speed.

In FIG. 4, the stator 20 includes six tooth parts 3, six winding slot parts 4, and a yoke part 5. In the stator 20, a tooth width 3d is 8 mm and a stator outer diameter 20d is 105 mm. Magnets 6 corresponding to four poles are arranged in the motor rotor 19. An outer diameter 19d of the motor rotor 19 is 46.8 mm.

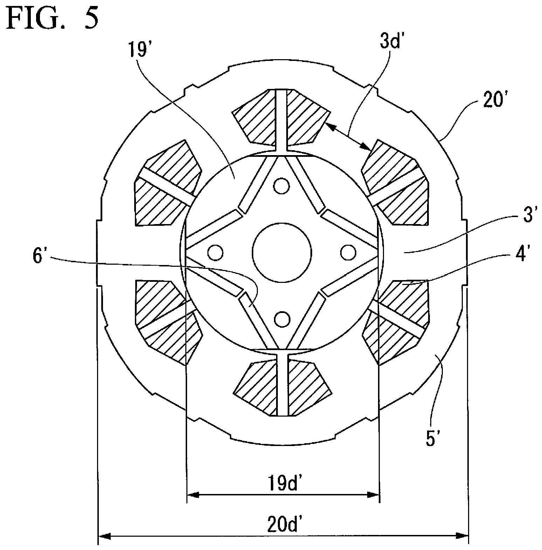

FIG. 5 is a cross-sectional view of a conventional motor included in a rotary compressor illustrated for comparison. FIG. 5 is the cross-sectional view of the motor incorporated in the compressor 10 and used instead of the motor 18 when the MRAS control is not applied.

In FIG. 5, a stator 20' includes six tooth parts 3', six winding slot parts 4', and a yoke part 5'. In the stator 20', a tooth width 3d' is 10 mm and a stator outer diameter 20d' is 105 mm. Magnets 6' corresponding to four poles are arranged in a motor rotor 19'. An outer diameter 19d' of the motor rotor 19' is 54.8 mm.

When a speed fluctuation suppression effect using the MRAS control is assumed, the outer diameter of the motor rotor 19 can be reduced (for example, from 54.8 mm to 46.8 mm) as described above. Furthermore, areas of the winding slot parts 4 of the stator 20 can be increased as illustrated in the drawing by reducing the outer diameter of the motor rotor 19. For example, in the illustrated example, the total area of the winding slot parts 4 is about 1.7 times the total area of the winding slot parts 4'. Furthermore, in the case of the stator 20 illustrated in FIG. 4, a ratio of the total area of the six winding slot parts 4 to an area of the entire stator 20 is about 32%. On the other hand, in the case of the stator 20' in the related art illustrated in FIG. 5, a ratio of the total area of the six winding slot parts 4' to an area of the entire stator 20' is about 23%. Note that, for calculation purposes, it is thought that the winding slot area can be enlarged to the same extent even for a motor with the same size (for example, a motor with a stator outer diameter in a range of 100 mm to 112) used for a rotary compressor of an air conditioner. In an alternative which is not claimed, even when the ratio of the total area of the six winding slot parts 4 to the area of the entire stator 20 is not 32%, design can also be performed so that the ratio thereof takes any value between 25% and 40%. 25% is computationally a lower limit value of the above ratio when a significant effect of a copper loss-reducing effect described below can be obtained as compared to the related art (in the case of 23%). Since problems such as strength, vibrations, and noise occur when the ratio of the total area of the winding slot parts 4 to the area of the entire stator 20 is too large, 40% is the maximum value of the above ratio in which an operation can be performed while avoiding such problems. Even with regard to the motor designed with the above ratio in a range of 25% to 40%, it is thought that a motor efficiency improvement effect described below can be obtained as compared to the conventional motor mounted in the rotary compressor designed for the air conditioner.

A ratio of the outer diameter of the motor rotor to the stator outer diameter is 46.8 mm/105 mm = 0.4457 ··· in the case of the motor rotor 19 and the stator 20 illustrated in FIG. 4. On the other hand, the ratio thereof is 55 mm/105 mm = 0.5238 ··· in the case of the motor rotor 19' and the stator 20' illustrated in FIG. 5. Note that, although the motor 18 in which the stator outer diameter is 105 mm has been exemplified in the above example, it is thought that a size of a motor rotor of a motor mounted in a rotary compressor for an air conditioner, a stator outer diameter of which is in a range of 100 mm to 112 mm, is reduced to the same extent. In addition, a size of a motor having a stator outer diameter of 125 mm is also reduced assuming MRAS control. In the case of such a motor, before the MRAS control is applied, the outer diameter of the motor rotor is 54.8 mm when the stator outer diameter is 125 mm. With regard to the motor before the MRAS control is applied, a ratio of the outer diameter of the motor rotor to the stator outer diameter is 54.8 mm/125 mm = 0.4384. Furthermore, an outer diameter of the miniaturized motor rotor after applying the MRAS control is 46.8 mm. A ratio of the outer diameter of the motor rotor to the stator outer diameter in the miniaturized motor rotor is 46.8 mm/125 mm = 0.3744.

Note that, since the outer diameter of the motor rotor of a motor having a stator outer diameter of 125 mm has also been reduced to 46.8 mm, it is thought that an outer diameter of a motor rotor of a motor having a stator outer diameter in a range of 100 mm to 125 mm including a motor having a stator outer diameter in a range of 100 mm to 112 mm can be reduced to 46.8 mm.

Note that, even when the outer diameter of the motor rotor 19 is not reduced to 46.8 mm, the outer diameter of the motor rotor of a motor having a stator outer diameter in the range of 100 mm to 112 mm can also be designed to be, for example, less than 50 mm while applying the MRAS control. Even in that case, it is thought that high efficiency can be obtained as compared to the conventional motor mounted in the rotary compressor designed for the air conditioner. Note that 46.8 mm is a lower limit value of the calculation of the outer diameter of the motor rotor from which a motor efficiency improvement effect can be obtained.

In other words, the efficiency of the motor can be improved by designing an outer diameter of a motor rotor 19 of a motor, in which a stator outer diameter is 100 mm or more and 125 mm or less, to be 46.8 mm or more and less than 50 mm. In addition, in order to obtain more remarkable effects, it is desirable to design the outer diameter of the motor rotor 19 to be 46.8 mm or more and 49 mm or less.

A ratio of a motor rotor weight to a stator weight is 0.80 kg/3.20 kg = 0.25 in the case of the motor rotor 19 and the stator 20 illustrated in FIG. 4. On the other hand, the ratio thereof is 1.14 kg/3.07 kg = 0.3713··· in the case of the motor rotor 19' and the stator 20' illustrated in FIG. 5. Note that, since a motor having a stator outer diameter of 125 mm is miniaturized after applying the MRAS control, a ratio of the motor rotor weight to the stator weight is 1.23 kg/4.66 kg = 0.2639 ···.

According to the embodiment, since the fluctuation of the rotational speed can be minimized using the MRAS control, it is possible to reduce the size and weight of the motor rotor 19 and improve the efficiency of the motor 18 as described above. Furthermore, it is possible to reduce an amount of use of the magnet 6 and reduce manufacturing costs by reducing the outer diameter of the motor rotor 19. The areas of the winding slot parts 4 can be increased by increasing the area of the stator 20 to a space occupied by the motor rotor 19. A winding diameter of a coil can be increased by increasing the areas of the winding slot parts 4. It is possible to reduce a resistance value and reduce the copper loss by increasing the winding diameter of the coil. Thus, it is possible to improve the efficiency of the motor 18, achieve high efficiency of the compressor 10, and improve an annual performance factor (APF).

For example, in the case of a heating intermediate output operation in which a contribution rate for improving the APF is higher (which is an operation state in which the APF is lower) than that of an operation with a heating rated output, a cooling rated output, and a cooling intermediate output, it is known that a percentage of copper loss is higher than that of iron loss in motor loss. Therefore, it is possible to reduce the copper loss of the motor 18 in the heating intermediate output operation and improve the efficiency of the motor, the compressor efficiency, and the APF of the air conditioner by applying the rotary compressor system according to the embodiment to the air conditioner.

Note that various motors such as a permanent magnet synchronous motor and an induction motor can be applied as the motor 18.

Although an example in which the stator outer diameter is 100 mm to 112 mm and an example in which the stator outer diameter is 125 mm have been described in the above-described embodiment, the present invention is not limited thereto. For example, a size of a motor having a stator outer diameter including 125 mm in the above example is about 125 mm to 135 mm; likewise, a motor having a stator outer diameter of about 90 mm, or a motor having a stator outer diameter of about 170 mm can be reduced to the same extent. For example, it is thought that rotor outer diameters of a motor having a stator outer diameter of about 125 mm to 135 mm, a motor having a stator outer diameter of about 90 mm, and a motor having a stator outer diameter of about 170 mm can also be set to about 46.8 mm.

In addition, the constituent elements in the above-described embodiment can be appropriately replaced with well-known constituent elements without departing from the scope of the present invention, which is defined by the claims. Furthermore, the technical scope of the present invention is not limited to the above-described embodiment and various modifications can be performed without departing from the scope of the present invention as defined by the claims. For example, although a four-pole and six-slot motor has been exemplified in the above example, it is thought that similar results can be obtained with motors having other poles and other slots (for example, six poles and nine slots). Note that the rotary compressor system includes the rotational speed control device 60, the sensorless vector control circuit 1, and the rotary compressor 10. The rotary compressor system according to the embodiment is used for an air conditioner.

Note that the total area of the six winding slot parts 4 is an example of the winding slot area and the entire area of the stator 20 is an example of the stator area.

While preferred embodiments of the invention have been described and illustrated above, it should be understood that these are exemplary of the invention and are not to be considered as limiting. Additions, omissions, substitutions, and other modifications can be made without departing from the scope of the present invention, which is defined by the claims. Accordingly, the invention is not to be considered as being limited by the foregoing description, and is only limited by the scope of the appended claims.

### EXPLANATION OF REFERENCES

1 Sensorless vector control circuit
3, 3' Tooth part
3d, 3d' Tooth width
4, 4' Winding slot part
5, 5' Yoke part
6, 6' Magnet
10 Compressor
11 Housing
12A, 12B Cylinder
13A, 13B Piston rotor
16 Crankshaft
18 Motor
19, 19' Motor rotor
20, 20' Stator
20d, 20d' Stator outer diameter
22A, 22B Opening
23A, 23B Suction port
24 Accumulator
25 Stay
26A, 26B Intake pipe
31 Converter
32 Capacitor
33 Reactor
34 Inverter
35 Current sensor
36 Current detection circuit
37 A/D conversion circuit
38 PWM duty calculation circuit
39 A/D conversion circuit
40 Voltage detection circuit
41 Full vector control circuit
42, 43 Two-phase/three-phase conversion circuit
44 Current PI control circuit
45 Current conversion table
46 Speed PI control circuit
47 Speed position estimation circuit
48 Subtractor
49 Subtractor
50 Current-estimating circuit
51 Speed-estimating circuit
52 Integrating circuit

## Claims

1. A rotary compressor system for an air conditioner, comprising:
a motor (18) controllable by sensorless vector control;
a rotary compressor (10) including the motor (18);and
a sensorless vector control circuit (1) configured to control the motor (18),
**characterized in that**
an outer diameter (19d) of a motor rotor (19) of the motor (18) is 46.8 mm or more and less than 50 mm; and
a ratio of a whole cross-sectional area of winding slots (4) to a whole cross-sectional area of a stator (20) of the motor (18) is 32%.

2. The rotary compressor system according to Claim 1, wherein the outer diameter (19d) of the motor rotor (19) of the motor (18) is 46.8 mm or more and 49 mm or less.

3. The rotary compressor system according to Claim 1 or 2, wherein the outer diameter (19d) of the motor rotor (19) of the motor (18) is 46.8 mm.

## Patentansprüche

1. Rotationskompressorsystem für eine Klimaanlage, umfassend:
einen Motor (18), der durch eine sensorlose Vektorsteuerung gesteuert werden kann;
einen Rotationskompressor (10) einschließlich des Motors (18); und
eine sensorlose Vektorsteuerschaltung (1), die dafür ausgelegt ist, den Motor (18) zu steuern,
**dadurch gekennzeichnet, dass**
ein Außendurchmesser (19d) eines Motorrotors (19) des Motors (18) 46,8 mm oder mehr und weniger als 50 mm beträgt; und
ein Verhältnis einer gesamten Querschnittsfläche von Wicklungsschlitzen (4) zu einer gesamten Querschnittsfläche eines Stators (20) des Motors (18) 32% beträgt.

2. Rotationskompressorsystem nach Anspruch 1, wobei der Außendurchmesser (19d) des Motorrotors (19) des Motors (18) 46,8 mm oder mehr und 49 mm oder weniger beträgt.

3. Rotationskompressorsystem nach Anspruch 1 oder 2, wobei der Außendurchmesser (19d) des Motorrotors (19) des Motors (18) 46,8 mm beträgt.

## Revendications

1. Système de compresseur rotatif pour un climatiseur comprenant :
un moteur (18) pouvant être commandé par une commande de vecteur sans capteur ;
un compresseur rotatif (10) comprenant le moteur (18) ; et
un circuit de commande de vecteur sans capteur (1) configuré pour commander le moteur (18),
**caractérisé en ce que** :
un diamètre externe (19d) d'un rotor de moteur (19) du moteur (18) est de 46,8 mm ou plus et inférieur à 50 mm ; et
un rapport de toute la surface de section transversale des fentes d'enroulement (4) sur toute la surface de section transversale d'un stator (20) du moteur (18) est de 32 %.

2. Système de compresseur rotatif selon la revendication 1, dans lequel le diamètre externe (19d) du rotor de moteur (19) du moteur (18) est de 46,8 mm ou plus et 49 mm ou moins.

3. Système de compresseur rotatif selon la revendication 1 ou 2, dans lequel le diamètre externe (19d) du rotor de moteur (19) du moteur (18) est de 46,8 mm.
